# EUROPÄISCHE PATENTSCHRIFT

(11) **EP 4 110 994 B1**
(45) Veröffentlichungstag und Bekanntmachung des Hinweises auf die Patenterteilung: **28.08.2024**
(21) Anmeldenummer: 21708217.1
(22) Anmeldetag: 25.02.2021
(51) Int. Cl.: E02B 1/00, A01M 29/24, E02B 5/08

(54) **HYBRIDER FISCHSCHUTZ AN EINLAUFRECHEN**
HYBRID FISH PROTECTION ON INTAKE SCREENS
PROTECTION HYBRIDE POUR POISSON SUR DES TAMIS D'ADMISSION

(30) Priorität: 28.02.2020 DE 102020105413
(43) Veröffentlichungstag der Anmeldung: 04.01.2023
(73) Patentinhaber: Hyfish GmbH, 6020 Innsbruck (AT)
(72) Erfinder: AUFLEGER, Markus, 82377 Penzberg (DE); BRINKMEIER, Barbara, 6020 Innsbruck (AT); HAUG, Jonas, 6020 Innsbruck (AT); TUTZER, Ruben, 6020 Innsbruck (AT)
(74) Vertreter: Dehns Germany Partnerschaft mbB
(86) Internationale Anmeldenummer: PCT/EP2021/054747
(87) Internationale Veröffentlichungsnummer: WO 2021/170753

(56) Entgegenhaltungen:
- JP-A- 2009 299 285
- JP-A- H01 248 496
- US-A- 2 605 742
- US-A- 4 593 648
- US-A- 5 078 542
- US-A- 5 445 111
- US-B1- 6 978 734

## Beschreibung

Die vorliegende Erfindung betrifft eine Vorrichtung und ein Verfahren zum Rückhalten von Fischen in einem Wasserkörper sowie ein Verfahren zum Bereitstellen einer Vorrichtung zum Rückhalten von Fischen in einem Wasserkörper.

### Stand der Technik

An den Einläufen von Wasserentnahmen aus Gewässern werden Rechen angeordnet. Unter anderem sind diese Einlaufrechen an Wasserkraftanlagen oder Kühlwasserentnahmen platziert. Rechen bestehen aus Rechenstäben, welche typischerweise mit gleich großen lichten Weiten zueinander angeordnet sind. Eine wichtige Aufgabe dieser Rechen ist der Schutz der Turbinen oder anderer maschinenbaulicher Einrichtungen vor Beschädigungen. Häufig reichen hierfür lichte Weiten in der Größenordnung von etwa 5 cm bis 20 cm aus. Soll der Einlaufrechen zusätzlich auch dem Fischschutz dienen, so müssen die lichten Weiten deutlich verringert werden. Im Sinne einer mechanischen Barriere sollen die Rechen dann die Fische davon abhalten in die Einläufe zu schwimmen. An Wasserkraftanlagen wird je nach Turbinentyp und Fischgröße ein Teil der in den Turbinenbereich gelangenden Tiere geschädigt oder getötet. Je kleiner die Abstände zwischen den Rechenstäben sind, umso besser werden die Fische zurückgehalten.

Im Zuge der Genehmigungsverfahren werden im Sinne des Fischschutzes oft sehr geringe Rechenabständen gefordert. Typisch ist hier die Forderung nach lichten Weiten zwischen etwa 10 mm und 25 mm. Je geringer die Rechenabstände sind, umso höher sind jedoch die hydraulischen Verluste und der Aufwand, der zur Reinigung und Instandhaltung der Rechen erforderlich ist. Zudem sind bei geringen lichten Weiten und ungünstigen Randbedingungen letale Verletzungen von Fischen mit einer hohen Wanderbereitschaft zu beobachten (BFS, 2012: Funktionskontrolle der Fischaufstiegs- und Fischabstiegshilfen sowie Erfassung der Mortalität bei Turbinendurchgang an der Wasserkraftanlage Kostheim am Main Endbericht, BÜROGEMEINSCHAFT FÜR FISCH- & GEWÄSSERÖKOLOGISCHE STUDIEN Frankfurt -Riedstadt - Marburg: http://www.lachsprojekt.de/main/News_%26_Archiv/Innlegg/2012/6/26_Funkti onskontrolle_Kostheim_Main_files/Endbericht_Kostheim_30.4.2012_klein.pdf.

Häufig sind die Rechen an den Einläufen zu den Wasserkraftanlagen stehend angeordnet, d.h. in der frontalen Ansicht verlaufen die Rechenstäbe in vertikaler Richtung. In verschiedenen Anwendungen haben sich auch Rechen mit horizontal verlaufenden Rechenstäben als vorteilhaft erwiesen.

In der WO 2013/060320 A1 wird ein Verfahren beschrieben, mit welchen Rechen mit Strom- und/oder Spannungsimpulsen beaufschlagt werden. Hierdurch sollen Rechen mit vergleichsweise großen lichten Weiten mit einer Scheuchfunktion ausgerüstet werden, so dass die Entnahme von Fischen aus dem Gewässer verhindert wird. Im Sinne der Beschreibung in WO 2013/060320 A1 werden die Rechenstäbe direkt mit Strom beaufschlagt.

In der EP 2 839 080 B1 wird gezeigt, dass durch typischerweise in horizontaler Richtung parallel gespannte Seile eine räumliche Struktur erreicht wird, welche Fische zurückhalten bzw. seitlich ableiten kann. An einem oder mehreren der parallel verlaufenden Seile kann elektrischer Strom angelegt wird. Die Stahlseile dienen dann als Anoden und Kathoden. Im Zuge weiterer Entwicklungen stellte sich dieses System als eine hinsichtlich des Fischverhaltens sehr vorteilhafte Kombination von mechanischer Barriere (Rechenstruktur) und Verhaltensbarriere (Scheuchwirkung durch Strom- und/oder Spannungsimpulse) dar. Es konnte gezeigt werden, dass auch bei vergleichsweise großen Abständen der Stahlseile (etwa 30 mm bis etwa 120 mm) hervorragende Fischschutzwirkungen möglich sind. Diese Untersuchungen (Tutzer und andere, 2019: The electric flexible fish fence - an integral fish protection measure / Der Elektro-Seilrechen als integrales Fischschutzkonzept, in: WasserWirtschaft - Fachzeitschrift für Wasser und Umwelttechnik 109/2-3, S. 36 - 40) bilden den Ausgangspunkt für das Konzept der Ausrüstung von Einlaufrechen im Sinne der vorgeschlagenen Erfindung.

JP 2009 299285 A zeigt einen elektrischen Schirm, der eine Vielzahl von Elektrodenstäben, die an einem Wasserweg aufgehängt sind, so dass mindestens ein unteres Ende davon ins Wasser getaucht werden kann und eine Spannung angelegt werden kann, und ein Gewicht, das am unteren Ende von jedem der Elektrodenstäbe befestigt ist, umfasst.

US 5 078 542 A stellt eine Vorrichtung bereit, um das Eindringen von Wasserlebewesen in einen Einlasswasserlauf zu verhindern, der einen U-förmigen Querschnitt mit einem schmalen Boden und einer breiten Oberfläche aufweist, wobei einander gegenüberliegende Elektroden vertikal entlang den Seitenwänden auf beiden Seiten des Einlasswasserlaufs installiert sind, und wobei der Abstand zwischen den oberen Enden der Elektroden größer ist als der Abstand zwischen den unteren Enden der Elektroden. Eine Spannung wird zwischen die beiden Elektroden eingeprägt. Da die Intensität der elektrischen Barriere an der Wasseroberfläche am kleinsten ist und zum Wassergrund hin größer wird, machen die Flussfische, die sich um den Wassergrund bewegen, eine Kehrtwende, wenn sie die starke elektrische Barriere erreichen, oder bewegen sich alternativ, wenn sie die starke elektrische Barriere erreichen, nach oben, wo die elektrische Barriere schwächer ist, und machen dann eine Kehrtwende, wodurch das Eindringen von aquatischen Arten in den Einlasswasserlauf verhindert werden kann.

US 5 445 111 A zeigt eine Vielzahl von elektrifizierten Fischsperren, die sich eignen, um Fische aus geschützten Bauwerken, z.B. Pumpeneinlässen, zu sperren Die meisten haben die Form von linearen Vorhanganordnungen (d. h. Anordnungen von fest voneinander beabstandeten vertikalen Elementen). Viele sind durch die Verwendung von drei oder mehr gepulsten Ansteuersignalen mit unterschiedlichen Spannungen gekennzeichnet. Dies führt zu einem elektrischen Feldmuster, das sich über die Breitseite der Anordnungen erstreckt und es den Fischen ermöglicht, sich umzudrehen und wegzuschwimmen, bevor sie eine gefährliche Feldstärke erreichen. Andere verwenden Sätze von Elektroden, die in gestaffelter, zeitgemultiplexter Weise angesteuert werden, um die Spitzenleistungsanforderungen zu reduzieren.

US 6 978 734 B1 zeigt eine elektrische Fischbarriere, die Fische daran hindert, in einen Wassereinlass in einem Reservoir oder entlang einer Wasserstraße einzudringen. Sie weist einen Satz leitender Elemente auf einem ersten Spannungspotential und einen zweiten Satz leitender Elemente auf einem zweiten Spannungspotential auf. Die leitenden Elemente sind auf Stützpfählen angeordnet, die sich vom Boden des Reservoirs nach oben erstrecken. Jedes leitende Element erstreckt sich vertikal zwischen einem vorbestimmten Bereich von Tiefen von einer oberen Tiefe zu einer unteren Tiefe, wodurch ein zusammenhängender Spannungsgradient zwischen den zwei Sätzen von leitenden Elementen gebildet wird. Fische werden von der Anziehungskraft des Wassers angezogen, das in den Einlass fließt. Die beiden Sätze leitender Elemente sind so ausgerichtet, dass der Anziehungsstrom durch den zusammenhängenden Spannungsgradienten fließt, wodurch die Fische davon abgehalten werden, dem Anziehungsstrom in den Wassereinlass zu folgen.

JP H01 248496 A zeigt zwei Elektrodenreihen aus leitenden Stabelektroden, die parallel in Wasser angeordnet sind. Ein elektrischer Schirm mit einer bestimmten Feldstärke ist zwischen beiden Elektrodenreihen ausgebildet.

### Offenbarung der Erfindung

Erfindungsgemäß werden eine Vorrichtung und ein Verfahren zum Rückhalten von Fischen in einem Wasserkörper sowie ein Verfahren zum Bereitstellen einer Vorrichtung zum Rückhalten von Fischen in einem Wasserkörper mit den Merkmalen der unabhängigen Patentansprüche vorgeschlagen. Vorteilhafte Ausgestaltungen sind Gegenstand der Unteransprüche sowie der nachfolgenden Beschreibung.

Eine räumliche Struktur bzw. Anordnung aus (im Wesentlichen) parallel angeordneten elektrischen Leitern wird in technisch vorteilhafter Weise an einem Einlaufrechen fixiert. Diese räumliche Struktur ist hierbei bezüglich der Fließrichtung oberhalb des Rechens angeordnet.

Von besonderer Bedeutung ist die Möglichkeit, diese elektrischen Leiter an bereits, insbesondere seit einem längeren Zeitraum, insbesondere mindestens 1 Jahr, in Betrieb befindlichen Einlaufrechen zu befestigen, d.h. nachzurüsten. Hierzu werden insbesondere geeignete Befestigungsmittel beziehungsweise geeignete Befestigungsmethoden vorgeschlagen, so dass die neu hinzugefügten elektrischen Leiter von der bestehenden Konstruktion des Einlaufrechens durch ein elektrisch isolierendes Material getrennt sind. Dadurch kann auch bei bereits bestehenden Anlagen ein Fischschutz, der beispielsweise durch nachträglich verschärfte Umweltgesetzgebung nötig wird, in wirtschaftlich günstiger Weise bereitgestellt werden. Es wird somit insbesondere auch ein Verfahren zur Ergänzung bzw. Nachrüstung von existierenden Einlaufrechen mit einer räumlichen Anordnung aus elektrischen Leitern, welche dem Rückhalt und der Ableitung von Fischen in Wasserkörpern dient, vorgeschlagen. Hierzu wird die räumliche Anordnung aus elektrischen Leitern bzw. werden die elektrischen Leiter an einem existierenden Einlaufrechen befestigt.

Die elektrischen Leiter werden mit Strom- und/oder Spannungsimpulsen beaufschlagt. Hierdurch werden im Sinne eines hybriden Schutzsystems beispielsweise Fische davon abgehalten, die Einlaufrechen zu durchschwimmen bzw. in die Einläufe zu schwimmen.

Die elektrischen Leiter können an jedem Rechenstab oder aber auch nur an einer geringeren Anzahl von Rechenstäben angeordnet werden. Die einzelnen elektrischen Leiter werden hierbei im Sinne einer Betrachtung quer zu den Rechenstäben alternierend als Anoden und Kathoden mit Strom bzw. Spannung beaufschlagt. Es ist jedoch auch möglich die Abfolge von Anoden und Kathoden in Zweiergruppen, Dreiergruppen beziehungsweise Gruppen von mehreren Anoden und Kathoden zu realisieren.

Die scheuchende Wirkung der an den elektrischen Leitern angelegten Strom- und/oder Spannungsimpulse auf Fische kann sowohl durch die Ausbildung des elektrischen Feldes als auch durch Stromflüsse im Wasserkörper begründet sein. Es kann daher grundsätzlich davon ausgegangen werden, dass diese abhaltende Wirkung der Elektrifizierung der Anordnung sowohl bei nichtisolierten als auch bei isolierten elektrischen Leitern gegeben ist. Bei den nichtisolierten elektrischen Leitern ist grundsätzlich eine bei gleicher Spannung bessere Scheuchwirkung zu erwarten. Bei isolierten Leitern sind deutliche Vorteile hinsichtlich möglicher Gefahren für Menschen aber auch in Bezug auf die Korrosionsanfälligkeit der Bauteile gegeben.

Die elektrischen Leiter des hybriden Fischschutzsystems zur Ausrüstung von Rechenanlagen können daher grundsätzlich sowohl elektrisch nichtisoliert als auch elektrisch isoliert sein.

In Ausgestaltungen der Erfindung kann von einer exakten Parallelität der elektrischen Leiter innerhalb der räumlichen Anordnung abgewichen werden. Beispielsweise können benachbarte Leiter zueinander einen Winkel von 0° bis 10° aufweisen oder auch windschief zueinander angeordnet sein. Eine Parallelität oder ein bestimmter eingeschlossener Winkel kann auch über die Länge eines elektrischen Leiters variabel sein. Mit anderen Worten kann in Ausgestaltungen der Erfindung auch vorgesehen sein, dass einzelne, mehrere oder alle elektrischen Leiter eine Krümmung aufweisen. Eine solche Krümmung kann bei benachbarten elektrischen Leitern gleich oder unterschiedlich ausgeprägt sein.

An den elektrischen Leitern werden insbesondere sehr kurze und rasch aufeinanderfolgende Strom- und/oder Spannungsimpulse aufgebracht.

Durch eine alternierende Abfolge von etwa gleich großen positiven und negativen Spannungen können die möglichen Gefahren für Menschen, welche unvorhergesehen mit den Leitern in Kontakt kommen, erheblich verringert werden. Hierbei ist darauf zu achten, dass die Höhe der alternierenden Strom- und/oder Spannungsimpulse so gering ist, dass keine gesundheitlichen Gefahren bestehen. Dieses Verfahren reduziert auch wirksam die Korrosionsanfälligkeit aller metallischen Bauelemente im Bereich des Einlaufrechens.

Es ist auch möglich, durch einen wiederholten Wechsel der Polaritäten der Anoden und Kathoden in ihrem zeitlichen Verlauf innerhalb definierter Zeitintervalle, insbesondere im Bereich von Sekundenbruchteilen bis zu einigen Minuten, beispielsweise zwischen 0,2 Millisekunden und 15 Minuten, bevorzugt zwischen 10 Sekunden und 10 Minuten, insbesondere zwischen 30 Sekunden und 2 Minuten, die Korrosionsanfälligkeit der Bauelemente zu verringern.

Weitere Vorteile und Ausgestaltungen der Erfindung ergeben sich aus der Beschreibung und den Figuren.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand von Ausführungsbeispielen in den Figuren schematisch dargestellt und wird im Folgenden unter Bezugnahme auf die Figuren ausführlich beschrieben.

Ist im Rahmen der vorliegenden Beschreibung von Oberwasser die Rede, so ist damit ein Teil eines Wasserkörpers in Fließrichtung stromauf des Rechens gemeint, Unterwasser bezeichnet dementsprechend einen Teil des Wasserkörpers stromab des Rechens.

Der bereits mehrfach erwähnte Begriff der räumlichen Struktur elektrischer Leiter bezieht sich insbesondere auf die relative Anordnung der Leiter zueinander, also beispielsweise auf Abstände zwischen benachbarten Leitern oder deren Parallelität bzw. Windschiefe zueinander, sowie auf die jeweilige Bestromung bzw. Beaufschlagung mit Strom- und/oder Spannungsimpulsen relativ zueinander.

Als nichtleitende Materialien bzw. Materialien mit einer geringen Leitfähigkeit werden im Sprachgebrauch der vorliegenden Offenbarung Materialien angesehen, die eine Leitfähigkeit von weniger als 10 S/m, 1 S/m oder 0,1 S/m aufweisen. Insbesondere weisen derartige Materialien eine geringere Leitfähigkeit als das Wasser des Wasserkörpers, in dem sie verwendet werden sollen, auf. Typische Beispiele für derartige Materialien mit geringer Leitfähigkeit sind Holz, Kunststoffe, wie z.B. verschiedene Polyvinylchloride, Polyethylene, Polypropylene, Polystyrole oder Polyester, Glas, oder keramische, insbesondere oxidische, Materialien.

### Figurenbeschreibung

### Es zeigen

Figur 1 eine schematische Darstellung eines Rechens (Frontansicht) mit vertikalen Rechenstäben mit einer räumlichen Struktur der elektrischen Leiter - Anordnung eines elektrischen Leiters an jedem Rechenstab mit einer alternierenden Abfolge von Anoden und Kathoden,
Figur 2 eine schematische Darstellung (Frontansicht) eines Rechens mit vertikalen Rechenstäben mit einer räumlichen Struktur der elektrischen Leiter - Anordnung eines elektrischen Leiters an jedem zweiten Rechenstab mit einer Abfolge von Anoden und Kathoden in Zweiergruppen,
Figur 3 eine räumliche Struktur von elektrischen Leitern, ausgeführt als metallische Stabprofile, an den oberwasserseitigen Enden der Stäbe eines Rechens fixiert und mittels geeigneter Abstandshalter und Befestigungen von den Rechenstäben elektrisch isoliert (Schnittansicht bzw. Draufsicht),
Figur 4 eine räumliche Struktur von elektrischen Leitern, ausgeführt als metallische Stabprofile, an den oberwasserseitigen Enden der Stäbe eines Rechens in einer Nut eingebettet und von den Rechenstäben elektrisch isoliert (Schnittansicht bzw. Draufsicht),
Figur 5 eine nicht-erfindungsgemäße räumliche Struktur von elektrischen Leitern, ausgeführt als metallische Rechteckprofile, an den unterwasserseitigen Enden der Stäbe eines Rechens fixiert und mittels geeigneter Abstandshalter und Befestigungen von den Rechenstäben elektrisch isoliert (Schnittansicht bzw. Draufsicht),
Figur 6 eine räumliche Struktur von elektrischen Leitern, ausgeführt als metallische Stabprofile, an den oberwasserseitigen Enden der Stäbe eines Rechens aus nichtleitendem Material fixiert (Schnittansicht bzw. Draufsicht),
Figur 7 eine nicht-erfindungsgemäße räumliche Struktur von elektrischen Leitern, ausgeführt als metallische Rechteckprofile, an den unterwasserseitigen Enden der Stäbe eines Rechens aus nichtleitendem Material fixiert (Schnittansicht bzw. Draufsicht),
Figur 8 eine räumliche Struktur von elektrischen Leitern, ausgeführt als metallische Rechteckprofile, integriert an den oberwasserseitigen Enden der Stäbe eines Rechens aus nichtleitendem Material (Schnittansicht bzw. Draufsicht),
Figur 9 eine räumliche Struktur von elektrischen Leitern, realisiert über ein ummanteltes metallisches Stabprofil oder ein Kabel, an den oberwasserseitigen Enden der Stäbe eines Rechens aus leitendem oder nichtleitendem Material fixiert (Schnittansicht bzw. Draufsicht),
Figur 10 eine räumliche Struktur von elektrischen Leitern, realisiert über ein ummanteltes metallisches Stabprofil oder ein Kabel, an den oberwasserseitigen Enden der Stäbe eines Rechens aus leitendem oder nichtleitendem Material in einer Nut eingebettet (Schnittansicht bzw. Draufsicht),
Figur 11 a,b eine räumliche Struktur von elektrischen Leitern, im Bereich der Räume zwischen den Stäben eines Rechens fixiert und mittels geeigneter Abstandshalter und Befestigungen von den Rechenstäben elektrisch isoliert (Schnittansicht bzw. Draufsicht),
Figur 12 eine räumliche Struktur von elektrischen Leitern, im Bereich der Räume zwischen den Stäben eines nichtleitenden Rechens fixiert (Schnittansicht bzw. Draufsicht).

In den Figuren sind bevorzugte Ausführungsformen der erfindungsgemäßen räumlichen Strukturen der elektrischen Leiter zur Ausrüstung von Einlaufrechen mit einem wirksamen hybriden Fischschutzsystem dargestellt. Diese Skizzen sind rein schematisch und nicht maßstabsgetreu und dienen lediglich der Veranschaulichung des Prinzips.

In den Figuren sind jeweils Rechenstäbe mit R, nichtleitende Rechenstäbe bzw. solche mit einer geringen elektrischen Leitfähigkeit mit RN, die lichte Weite zwischen benachbarten Rechenstäben R, RN mit a sowie deren Stärke bzw. Dicke mit d, elektrische Leiter mit E, eine (Haupt-)Fließrichtung eines Wasserkörpers mit F und eine elektrische Isolierung mit I bezeichnet.

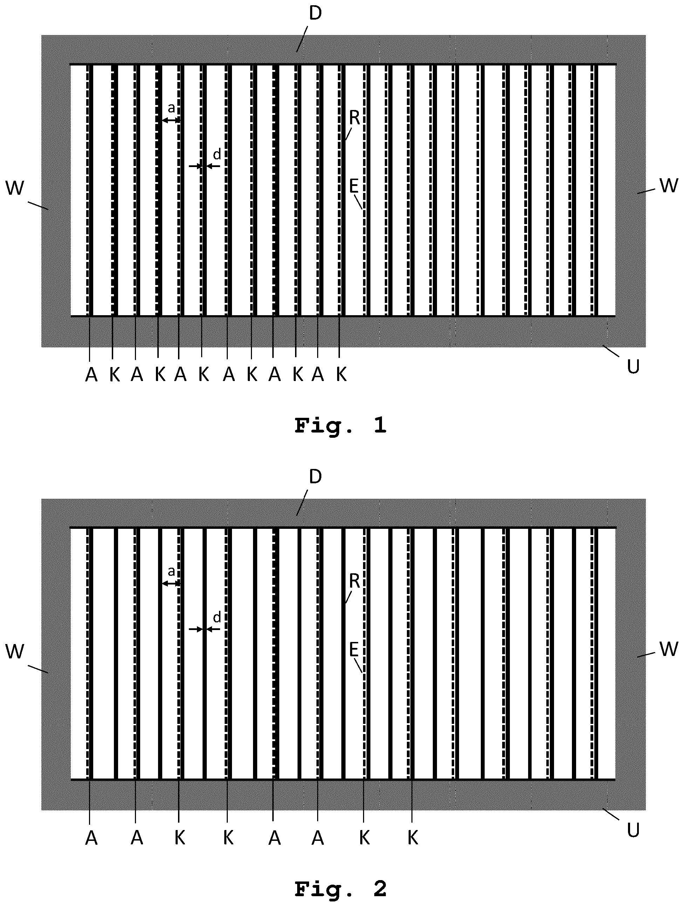

In Figur 1 und Figur 2 ist jeweils ein Einlaufrechen mit vertikalen Rechenstäben R dargestellt. Die Stäbe reichen typischerweise von einer Einlaufdecke D bis zu einem Fundament beziehungsweise Untergrund U. Der Einlaufrechen ist beispielsweise seitlich durch Seitenwände W begrenzt. Dieser Rechen besitzt typischerweise lichte Weiten a von wenigen bis einigen Zentimetern, insbesondere zwischen 1 und 30 Zentimetern beispielsweise 5 cm oder 20 cm.

In Ausgestaltungen der Erfindung wird der Rechen durch eine räumliche Struktur elektrischer Leiter E so ergänzt, dass entweder an jedem einzelnen Rechenstab R oder aber nur an einer geringeren Anzahl von Rechenstäben, beispielsweise an jedem zweiten, dritten, vierten, fünften oder zehnten Rechenstab, metallische Profile oder auch andere Formen elektrischer Leiter, z.B. (unisolierte) Seile oder (isolierte) Kabel, in geeigneter Weise fixiert werden. Diese elektrischen Leiter E werden während des Betriebs der Anlage so mit Strom- und/oder Spannungsimpulsen beaufschlagt, dass sich in Richtung quer zu den Rechenstäben entweder alternierend oder aber in Zweiergruppen beziehungsweise auch in größeren Gruppen Anoden und Kathoden abwechseln.

Die Anordnung der Rechenstäbe und der räumlichen Struktur der elektrischen Leiter kann im Sinne der Erfindung auch in horizontaler Richtung oder einer anderen Richtung erfolgen. Typischerweise aber nicht zwingend notwendigerweise sind die elektrischen Leiter der räumlichen Struktur parallel zu den Rechenstäben angeordnet.

Als 'elektrisch nichtleitend' sind im Sinne dieser Beschreibung Materialien mit einer vergleichsweise (sehr) niedrigen elektrischen Leitfähigkeit, insbesondere einer Leitfähigkeit, die niedriger als jene von natürlich vorkommendem Süßwasser ist, zu verstehen.

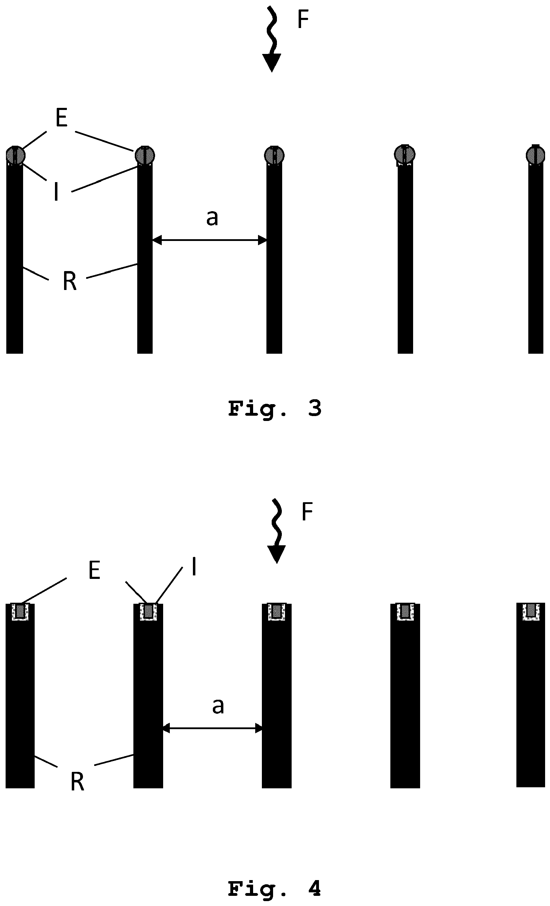

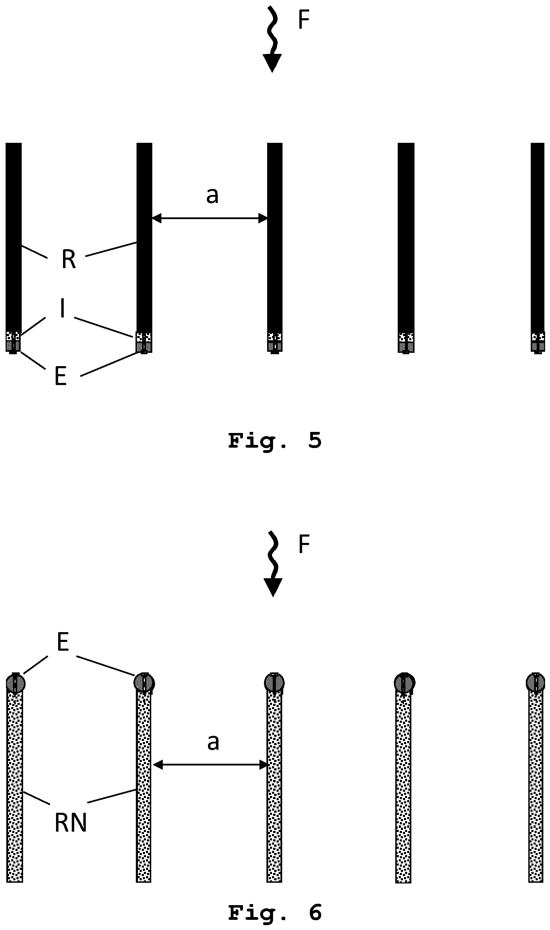

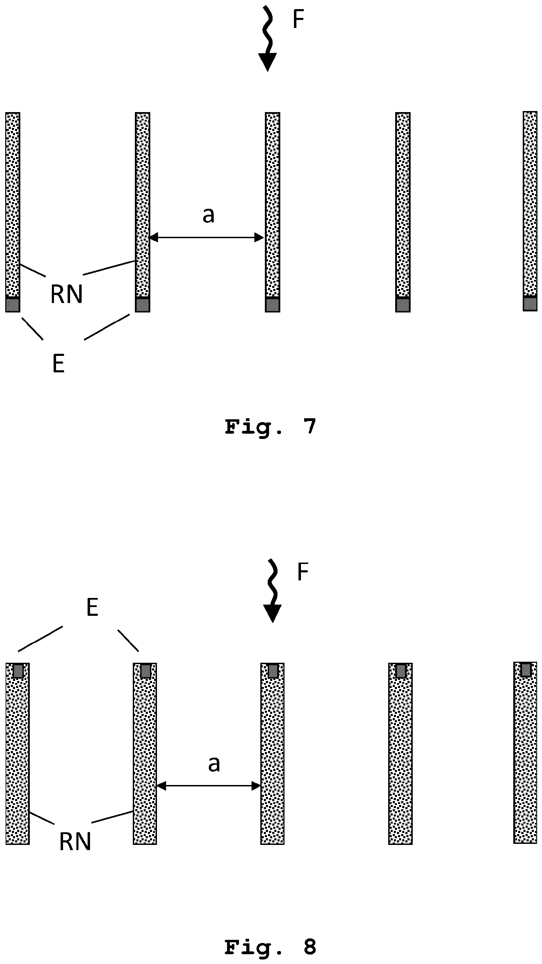

In den Figuren 3 bis 10 sind exemplarisch Möglichkeiten der Anordnung der elektrischen Leiter E an elektrisch leitenden Rechenstäben R und elektrisch nichtleitenden Rechenstäben RN dargestellt. Diese Figuren sind für Rechen mit vertikalen Stäben als Grundrissskizzen und für Rechen mit horizontalen Stäben als Schnitte zu verstehen. Die Fließrichtung F ist im Wesentlichen senkrecht auf die Rechen ausgerichtet, kann aber auch schräg zum Rechen erfolgen. Die elektrisch leitenden Rechenstäbe R werden durch eine Isolierung I von den elektrischen Leitern E getrennt.

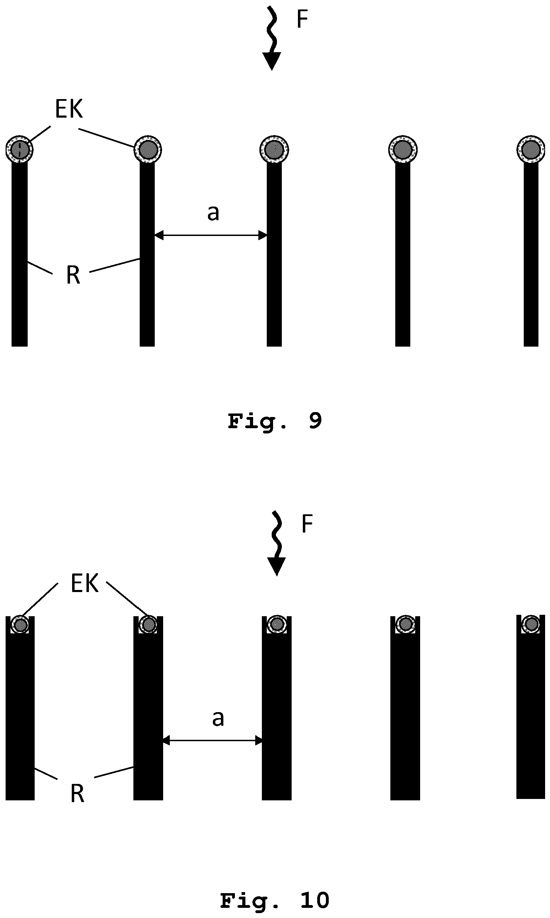

In Bezug auf potentielle Gefahren für Menschen und zur Reduzierung der Korrosionsanfälligkeit kann die Verwendung von ummantelten metallischen Stabprofilen oder Seilen (d.h. Kabeln) EK vorteilhaft sein. Mögliche Anordnungen hierzu sind in den Figuren 9 und 10 dargestellt.

Für den hybriden Fischschutz ist es insbesondere erforderlich, dass sich die durch die Strom- und/oder Spannungsimpulse hervorgerufene Scheuchwirkung insbesondere bezogen auf die Fließrichtung F oberwasserseitig des Rechens ausbildet. Hierzu ist es grundsätzlich vorteilhaft, wenn sich im Nahfeld der elektrischen Leiter E keine Bauelemente mit einer hohen elektrischen Leitfähigkeit befinden. Aus diesem Grunde kann die Verwendung von elektrisch nicht beziehungsweise wenig leitenden Rechenstäben RN vorteilhaft sein.

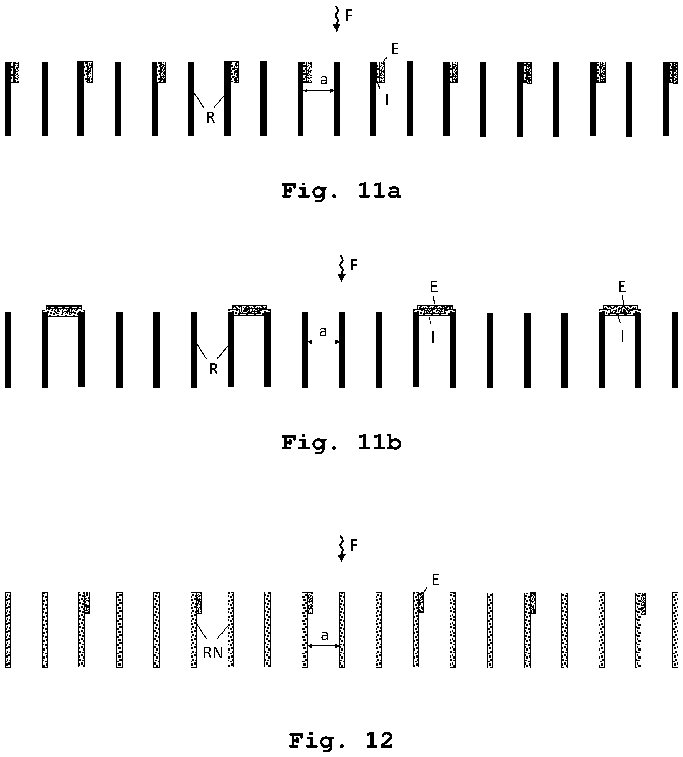

Figuren 11a,b und Figur 12 zeigen konstruktive Möglichkeiten der Ausrüstung von Rechen mit elektrisch leitenden (Figuren 11a,b) und nichtleitenden (Figur 12) Stäben mit einer räumlichen Struktur aus elektrischen Leitern E, welche in den Räumen zwischen den Rechenstäben R beziehungsweise RN in vorteilhafter Form angeordnet werden. Dabei ist eine Anordnung eines elektrischen Leiters E jeweils nur an einem Stab (Figur 11a, Figur 12) und eine Anordnung eines elektrischen Leiters E an mehreren (hier zwei) Stäben (Figur 11b) vorteilhaft.

Grundsätzlich ist bei der Ausrüstung von Einlaufrechen mit einer räumlichen Struktur aus elektrischen Leitern darauf zu achten, dass die Verklausungsanfälligkeit und die Reinigungsmöglichkeiten der Rechen nicht verschlechtert werden. Hierzu ist es zweckmäßig, etwaige Einengungen der Räume zwischen den Rechenstäben direkt an deren oberwasserseitigen Enden vorzunehmen.

An einer großen Anzahl von Rechen wird der störungsfreie Betrieb über Rechenreinigungsanlagen ermöglicht. Diese sind bei einer Ausrüstung der Rechen mit einem hybriden Fischschutzsystem in vorteilhaften Ausgestaltungen der Erfindung so auszulegen, dass elektrische Kurzschlüsse oder andere Betriebseinschränkungen vermieden werden.

### Bezugszeichenliste

- F: Fließrichtung
- U: Untergrund / Fundament
- W: Seitenwände
- D: Einlaufdecke
- R: Rechenstäbe
- RN: Rechenstäbe aus elektrisch nichtleitenden Materialien
- E: Elektrische Leiter
- EK: Elektrische Kabel oder ummantelte elektrische Leiter
- I: Isolierung
- A: Anode
- K: Kathode
- a: Lichte Weite zwischen den Rechenstäben
- d: Breite beziehungsweise Stärke der Rechenstäbe quer zur Fließrichtung

## Patentansprüche

1. Vorrichtung zum Rückhalten von Fischen in einem Wasserkörper mit einem Einlaufrechen, der mehrere Stäbe (R, RN) aufweist, mit einer räumlichen Anordnung aus elektrischen Leitern (E, EK), welche an dem Einlaufrechen fixiert sind,
wobei die elektrischen Leiter (E, EK) an einem oberwasserseitigen Ende der Stäbe (R, RN) angeordnet sind und von den Stäben (R, RN) durch zumindest ein elektrisch nichtleitendes Material (I) isoliert sind,
wobei die elektrischen Leiter (E, EK) dazu eingerichtet sind, quer zu den Rechenstäben alternierend oder in Zweiergruppen, Dreiergruppen oder größeren Gruppen als Anoden und Kathoden mit Strom- und/oder Spannungsimpulsen beaufschlagt zu werden.

2. Vorrichtung nach Anspruch 1, wobei die elektrischen Leiter (E, EK) an jedem der Stäbe (R, RN) oder an einer Anzahl der Stäbe (R, RN) befestigt sind.

3. Vorrichtung nach Anspruch 1 oder 2, wobei die Stäbe (RN) zumindest teilweise aus elektrisch nichtleitendem Material oder Material mit einer geringen elektrischen Leitfähigkeit, insbesondere unter 10 S/m, 1 S/m oder 0,1 S/m, bestehen.

4. Vorrichtung nach einem der vorstehenden Ansprüche, wobei die elektrischen Leiter (E) zumindest teilweise aus nicht isolierten metallischen Profilen oder nicht isolierten metallischen Seilen bestehen.

5. Vorrichtung nach einem der vorstehenden Ansprüche, wobei die elektrischen Leiter (EK) zumindest teilweise aus isolierten metallischen Profilen oder Kabeln bestehen.

6. Vorrichtung nach einem der vorstehenden Ansprüche, wobei die elektrischen Leiter (E, EK) zwischen jeweils zwei der Rechenstäbe (R, RN) angeordnet sind.

7. Vorrichtung nach einem der vorstehenden Ansprüche, wobei die elektrischen Leiter (E, EK) an einem bereits, insbesondere seit wenigstens einem Jahr, in Betrieb befindlichen Einlaufrechen befestigt sind.

8. Verfahren zum Bereitstellen einer Vorrichtung zum Rückhalten von Fischen in einem Wasserkörper, insbesondere einer Vorrichtung nach einem der vorstehenden Ansprüche, wobei ein in einem Wasserkörper befindlicher Einlaufrechen mit einer räumlichen Anordnung aus elektrischen Leitern (E, EK) ausgerüstet wird, wobei die elektrischen Leiter (E, EK) an einem oberwasserseitigen Ende der Stäbe (R, RN) angeordnet werden, wobei die elektrischen Leiter (E, EK) von den Stäben (R, RN) durch zumindest ein elektrisch nichtleitendes Material (I) isoliert sind, wobei die elektrischen Leiter (E, EK) dazu eingerichtet werden, quer zu den Rechenstäben alternierend oder in Zweiergruppen, Dreiergruppen oder größeren Gruppen als Anoden und Kathoden mit Strom- und/oder Spannungsimpulsen beaufschlagt zu werden.

9. Verfahren zum Rückhalten von Fischen in einem Wasserkörper, wobei Strom- und/oder Spannungsimpulse an die elektrischen Leiter (E, EK) einer Vorrichtung nach einem der Ansprüche 1 bis 7 angelegt werden, so dass insbesondere die Fische verhaltensbedingt daran gehindert werden, den Einlaufrechen zu durchschwimmen.

10. Verfahren nach Anspruch 9, wobei aufeinanderfolgende Strom- und/oder Spannungsimpulse in ihrer zeitlichen Abfolge mit jeweils im Wesentlichen gleich großen positiven und negativen Spannungen angelegt werden.

11. Verfahren nach Anspruch 9 oder 10, wobei während definierter Zeitintervalle, insbesondere im Bereich von 0,2 Millisekunden bis 15 Minuten, die Polarität der elektrischen Leiter (E, EK) wechselt.

## Claims

1. Device for retaining fish in a body of water, having an inlet screen which has a plurality of bars (R, RN), having a spatial arrangement of electrical conductors (E, EK) which are fixed to the inlet screen, the electrical conductors (E, EK) being arranged at an upstream end of the bars (R, RN) and being insulated from the bars (R, RN) by at least one electrically non-conductive material (I),
wherein the electrical conductors (E, EK) are arranged to be subjected to current and/or voltage pulses alternately or in groups of two, groups of three or larger groups as anodes and cathodes transversely to the screen bars.

2. Device according to claim 1, wherein the electrical conductors (E, EK) are attached to each of the bars (R, RN) or to a number of the bars (R, RN).

3. Device according to claim 1 or 2, wherein the bars (RN) consist at least partially of electrically non-conductive material or material with a low electrical conductivity, in particular below 10 S/m, 1 S/m or 0.1 S/m.

4. Device according to any one of the preceding claims, wherein the electrical conductors (E) consist at least partially of non-insulated metallic profiles or non-insulated metallic cables.

5. Device according to any one of the preceding claims, wherein the electrical conductors (EK) consist at least partially of insulated metallic profiles or cables.

6. Device according to any one of the preceding claims, wherein the electrical conductors (E, EK) are each arranged between two of the screen bars (R, RN).

7. Device according to any one of the preceding claims, wherein the electrical conductors (E, EK) are attached to an inlet screen which has already been in operation, in particular for at least one year.

8. Method for providing a device for retaining fish in a body of water, in particular a device according to one of the preceding claims, wherein an inlet screen located in a body of water is equipped with a spatial arrangement of electrical conductors (E, EK), wherein the electrical conductors (E, EK) are arranged at an upstream end of the bars (R, RN), wherein the electrical conductors (E, EK) are insulated from the bars (R, RN) by at least one electrically non-conductive material (I), wherein the electrical conductors (E, EK) are arranged to be subjected to current and/or voltage pulses alternately or in groups of two, groups of three or larger groups as anodes and cathodes transversely to the screen bars.

9. Method for retaining fish in a body of water, wherein current and/or voltage pulses are applied to the electrical conductors (E, EK) of a device according to one of claims 1 to 7, so that in particular the fish are behaviourally prevented from swimming through the inlet screen.

10. Method according to claim 9, wherein successive current and/or voltage pulses are applied in their temporal sequence with positive and negative voltages of substantially equal magnitude in each case.

11. Method according to claim 9 or 10, wherein the polarity of the electrical conductors (E, EK) changes during defined time intervals, in particular in the range from 0.2 milliseconds to 15 minutes.

## Revendications

1. Dispositif pour retenir des poissons dans un corps d'eau avec un râteau d'entrée qui présente plusieurs barres (R, RN), avec un agencement spatial de conducteurs électriques (E, EK) qui sont fixés au râteau d'entrée, les conducteurs électriques (E, EK) étant disposés à une extrémité côté amont des barres (R, RN) et étant isolés des barres (R, RN) par au moins un matériau électriquement non conducteur (I),
les conducteurs électriques (E, EK) étant conçus pour être soumis à des impulsions de courant et/ou de tension en alternance ou par groupes de deux, trois ou plus, en tant qu'anodes et cathodes, transversalement aux barres de râteau.

2. Dispositif selon la revendication 1, dans lequel les conducteurs électriques (E, EK) sont fixés à chacune des barres (R, RN) ou à un certain nombre des barres (R, RN).

3. Dispositif selon la revendication 1 ou 2, dans lequel les barres (RN) sont constituées au moins en partie d'un matériau non conducteur de l'électricité ou d'un matériau ayant une faible conductivité électrique, notamment inférieure à 10 S/m, 1 S/m ou 0,1 S/m.

4. Dispositif selon l'une quelconque des revendications précédentes, dans lequel les conducteurs électriques (E) sont constitués au moins en partie de profilés métalliques non isolés ou de câbles métalliques non isolés.

5. Dispositif selon l'une quelconque des revendications précédentes, dans lequel les conducteurs électriques (EK) sont constitués au moins en partie de profilés ou de câbles métalliques isolés.

6. Dispositif selon l'une quelconque des revendications précédentes, dans lequel les conducteurs électriques (E, EK) sont disposés entre deux des barres de calcul (R, RN) respectivement.

7. Dispositif selon l'une quelconque des revendications précédentes, dans lequel les conducteurs électriques (E, EK) sont fixés à un râteau d'entrée déjà en service, notamment depuis au moins un an.

8. Procédé pour fournir un dispositif pour retenir des poissons dans un corps d'eau, en particulier un dispositif selon l'une des revendications précédentes, dans lequel un râteau d'entrée se trouvant dans un corps d'eau est équipé d'un agencement spatial de conducteurs électriques (E, EK), les conducteurs électriques (E, EK) étant disposés à une extrémité côté amont des barres (R, RN), les conducteurs électriques (E, EK) étant isolés des barres (R, RN) par au moins un matériau électriquement non conducteur (I),
dans lequel les conducteurs électriques (E, EK) sont adaptés pour être soumis à des impulsions de courant et/ou de tension en alternance ou par groupes de deux, trois ou plus, en tant qu'anodes et cathodes, transversalement aux barres de râteau.

9. Procédé pour retenir des poissons dans un corps d'eau, dans lequel des impulsions de courant et/ou de tension sont appliquées aux conducteurs électriques (E, EK) d'un dispositif selon l'une des revendications 1 à 7, de sorte que, en particulier, les poissons sont empêchés, en raison de leur comportement, de traverser à la nage la râteau d'entrée.

10. Procédé selon la revendication 9, dans lequel des impulsions successives de courant et/ou de tension sont appliquées dans leur séquence temporelle, chacune avec des tensions positives et négatives sensiblement égales.

11. Procédé selon la revendication 9 ou 10, dans lequel, pendant des intervalles de temps définis, en particulier dans la plage de 0,2 milliseconde à 15 minutes, la polarité des conducteurs électriques (E, EK) change.
